# EUROPÄISCHE PATENTSCHRIFT

(11) **EP 1 722 192 B1**
(45) Veröffentlichungstag und Bekanntmachung des Hinweises auf die Patenterteilung: **15.06.2016**
(21) Anmeldenummer: 06113279.1
(22) Anmeldetag: 28.04.2006
(51) Int. Cl.: G01C 15/00, B23Q 17/24, B25H 7/00

(54) **Handhabbares Flächenkoordinatenmessgerät**
Easy to use area coordinate measuring device
Appareil manuel de mesure des coordonnées de surfaces

(30) Priorität: 12.05.2005 DE 102005000060
(43) Veröffentlichungstag der Anmeldung: 15.11.2006
(73) Patentinhaber: HILTI Aktiengesellschaft, 9494 Schaan (LI)
(72) Erfinder: Binder, Albert, 9470, Buchs (CH)
(74) Vertreter: Hilti Aktiengesellschaft Corporate Intellectual Property

(56) Entgegenhaltungen:
- EP-A2- 1 249 291
- EP-A2- 1 275 470
- DE-A1- 19 800 336
- US-A- 5 696 705
- US-A1- 2002 005 789

## Beschreibung

Die Erfindung bezeichnet ein handhabbares Flächenkoordinatenmessgerät vorzugsweise zur Vermessung von Koordinaten auf Wandflächen des Baugewerbes sowie ein zugeordnetes Messverfahren.

Die Koordinaten eines im allgemeinen 3-dimensional bestimmten Raumpunktes bezüglich einer Fläche werden als Flächenkoordinaten bezeichnet. Üblicherweise wird dazu ein innerhalb der Fläche definiertes lokales kartesisches Flächenkoordinatensystem verwendet, vorzugsweise mit dem Ursprung an einem Eckpunkt und zumindest einer Koordinatenachse längs einer Kante der Fläche verwendet.

Insbesondere im Baugewerbe spielt die Vermessung / Markierung von Flächenkoordinaten auf Wandflächen, worunter im Sinne der Erfindung zumindest stückweise ebene Oberflächen sowohl von Seitenwänden als auch von Decken, Böden etc. zu verstehen sind, eine wichtige Rolle, bspw. zur Positionierung von Befestigungspunkten. Bei Seitenwänden verlaufen die Innenkanten üblicherweise zumeist annähernd horizontal bzw. vertikal.

Die traditionelle Art zur Vermessung / Markierung von Flächenkoordinaten auf Wandflächen besteht in der aufeinanderfolgenden Benutzung eines Gliedermassstabes in einer von zwei zueinander senkrechten Richtungen jeweils zur Distanzmessung von einem virtuellen Schnittpunkt bis zur nächstliegenden Innenkante. Neben der Unsicherheit des virtuellen Schnittpunktes ist insbesondere der Zeitaufwand für die Doppelmessung nachteilig.

Nach der DE3839797 ist zum Abstecken von Demarkationen ein elektrooptisches Entfernungsmesssystem bekannt, das mit einem horizontalen und einem vertikalen Winkelmesssystem kombiniert ist.

Nach der DE19643800 ist ein Markierungsgerät bekannt, welches im Zusammenwirken mit einem Rotationslaser längs einer Linie äquidistant beabstandete Markierungen für Befestigungspunkte an einer Wandfläche erzeugt. Dabei zeigt die DE10034035 ein derartiges Markierungsgerät, welches innerhalb eines Toleranzbereiches einen Positionierungsfehler des Gehäuses ausgleicht.

Nach der CH691330 ist ein transportabler Rotationslaser mit einem Laserentfernungsmesssystem und einem Winkelmesssystem kombiniert, wodurch neben der Generierung virtueller Ebenen mittelbar die Position eines reflektierenden Hilfsmittels im dreidimensionalen Raum innerhalb der virtuellen Ebene bestimmbar ist. Zur direkten Vermessung / Markierung von Flächenkoordinaten auf Wandflächen ist ein derartiger Rotationslaser ungeeignet.

Zudem ist nach der US6202312 ein optisches Markierungsgerät bekannt, das zwei aufgefächerte Laserstrahlen projiziert, die in einer Wandfläche zueinander senkrecht stehen.

Aus EP1275470 ist ein Flächenkoordinatenmessgerät mit einem elektronischen Entfernungsmesssystem bekannt, das die Distanzen eines Flächenpunktes in einer Längsmessrichtung und einer senkrechten Quermessrichtung bestimmt und aus den Längs- und Querdistanzen lokale Flächenkoordinaten des Flächenpunktes berechnet. Das Flächenkoordinatenmessgerät umfasst ein erstes elektronisches Entfernungsmesssystem für die Längsmessrichtung und ein zweites elektronisches Entfernungsmesssystem für die Quermessrichtung. Das Flächenkoordinatenmessgerät dient zum zielgeführten Positionieren eines Werkzeuggerätes oder zum zielgeführten Markieren einer Arbeitsposition für ein Werkzeuggerät.

Aus EP1249291 ist eine Positionierhilfe zum definierten Ansetzen eines Handwerkzeuggerätes mit einem elektronischen Entfernungsmesssystem bekannt, das die Distanzen eines Flächenpunktes in einer Längsmessrichtung und einer quer zur Längsmessrichtung orientierten Quermessrichtung bestimmt. Aus den Längs- und Querdistanzen werden lokale Flächenkoordinaten des Flächenpunktes berechnet und mit Sollwerten verglichen.

DE19800336 offenbart eine Kamera mit einem elektronischen Entfernungsmesssystem, das einen vertikalen Abstand und einen minimalen Abstand der Kamera zu einer geneigten Oberfläche bestimmt. Die Kamera weist ein Schwenkmittel auf, mit dem das Entfernungsmesssystem um eine Schwenkachse verschwenkbar ausgebildet ist.

Die Aufgabe der Erfindung besteht in der Realisierung eines handhabbaren Flächenkoordinatenmessgerätes und zugeordneten Messverfahrens, welches das Ausmessen, Positionieren oder Markieren von Flächenkoordinaten auf einer Wandfläche vereinfacht.

Die Aufgabe wird im Wesentlichen durch die Merkmale der unabhängigen Ansprüche gelöst. Vorteilhafte Weiterbildungen ergeben sich aus den Unteransprüchen.

So weist ein Flächenkoordinatenmessgerät neben einem zur Bestimmung einer Längsdistanz längs einer Längsmessrichtung geeigneten elektronischen Entfernungsmesssystem ein Quermessmittel zur zusätzlichen Bestimmung einer Querdistanz längs einer quer zu der Längsmessrichtung orientierten Quermessrichtung auf, wobei das Quermessmittel ein die Messrichtung zumindest um einen Winkel von 90° steuerbar verschwenkendes Schwenkmittel ist und im Winkel von 0° die Längsdistanzmessung und im Winkel von 90° die Querdistanzmessung erfolgt. Geeignete Schwenkmittel sind beispielsweise ein steuerbar schwenkbares Umlenkmittel (reflektierend oder brechend) für den Messstrahl, ein (zumindest bis auf wenige fest angeordnete Baugruppen) steuerbar schwenkbares elektronisches Entfernungsmesssystem, etc. Die Steuerung des Schwenkmittels kann dabei über einen Winkelregelkreis mit einem Antriebsmittel (Motor) und einem Winkelsensor geregelt oder alternativ direkt gesteuert über einen im definierten Winkel (absolut oder inkrementell) ansteuerbaren Winkelgeber (Schrittmotor) erfolgen.

Vorteilhaft ist das Entfernungsmesssystem als übliches Laserentfernungsmesssystem ausgebildet, wodurch Distanzen mit einer Genauigkeit einiger mm im Messbereich einiger 100 m gemessen werden können. Prinzipiell ist jedoch auch ein gerichtetes Ultraschall-Messsystem als Entfernungsmesssystem möglich.

Vorteilhaft ist zumindest ein bezüglich der Erdbeschleunigung sensitiver Nivelliersensor vorhanden, der eine Messrichtung horizontal oder vertikal auszurichten gestattet, wodurch die Messrichtungen horizontal bzw. vertikal verlaufen. Im einfachsten Fall ist dies vom Nutzer aktiv kontrolliert über die vom Nivelliersensor (Libelle) detektierte Lage des an der Wandfläche angesetzten Gehäuses möglich. Da dies im Bauwesen üblicherweise bei Innenkanten zu Seitenwänden der Fall ist, befindet sich der lokale Koordinatenursprung exakt in der aus beiden Innenkanten gebildeten Innenecke der Seitenwand, was im Bauwesen eine übliche Bezugsbasis für lokale Flächenkoordinaten darstellt.

Vorteilhaft ist der Nivelliersensor mit dem Rechenmittel regelnd verbunden, wodurch (zumindest in einem zulässigen Winkelbereich von bspw. +/- 25°) eine automatische Nivellierung der Messrichtung stattfindet, die unabhängig von der Lage des Gehäuses ist, wodurch die manuelle Positionierung entbehrlich ist.

Vorteilhaft ist das Positionierungsmittel als eine Markierungskontur (Loch, Ecke, Kreuzschlitz, etc.) ausgebildet, wodurch mit einem Zeichenmittel (Fettstift, Bleistift, etc.) mittels Führung entlang der Markierungskontur die Position des Flächenpunktes an der Wandfläche exakt markierbar ist.

Vorteilhaft ist dem Rechenmittel ein Speichermittel zur Speicherung zumindest von Koordinatenwerten zugeordnet, wodurch die aktuell gemessenen Flächenkoordinaten des Positionierungsmittels mit vorgegebenen gespeicherten Soll-Koordinaten vergleichbar sind, deren Differenzmass einen Positionierungsfehler darstellt.

Vorteilhaft ist eine zumindest mit dem Rechenmittel verbundene übliche Datenübertragungsschnittstelle (Funk, IR, etc.) zu einem Computer vorhanden, wodurch Soll-Koordinaten empfangen bzw. gemessene Flächenkoordinaten oder erfolgreich markierte Soll-Koordinaten zur Dokumentation abgespeichert werden können.

Vorteilhaft ist eine mechanische Befestigungsschnittstelle (Montageflansch etc.) zu einer passend zugeordneten Handwerkzeugmaschine (Bohrhammer, Kernbohrmaschine, Schraubmaschine, Bolzensetzgerät, etc.) vorhanden, deren die Wandfläche bearbeitendes Werkzeug das am Positionierungsmittel angeordnete Markierungsmittel ist, wodurch die Flächenkoordinaten eines mit der Handwerkzeugmaschine an der Wandfläche erstellten Arbeitsprodukts (Bohrloch, Befestigungsmittel, Setzbolzen, etc.) unmittelbar messbar ist.

In dem Messverfahren zur Messung der Flächenkoordinaten eines Flächenpunktes einer Wandfläche mit einem Flächenkoordinatenmessgerät mit obigen Merkmalen weist das Rechenmittel einen programmgesteuerten Algorithmus auf, welcher in einem Messschritt eine Längsdistanzmessung zu einem Messpunkt entlang einer Längsmessrichtung sowie eine Querdistanzmessung zu einem Messpunkt entlang einer Quermessrichtung durchführt und in einem weiteren Berechnungsschritt aus den beiden Messwerten der Längsdistanzmessung sowie der Querdistanzmessung lokale Flächenkoordinaten des Positionierungspunktes ermittelt.

Vorteilhaft wird im Messschritt der Längsdistanzmessung / Querdistanzmessung mittels gesteuertem Schwenkmittel eine Folge von mehreren Einzelmessungen zu winklig differentiell versetzten Messrichtungen durchgeführt sowie deren Längsdistanzen / Querdistanzen erfasst, und jeweils eine aus den Längsdistanzen / Querdistanzen ermittelte Minimallängsdistanz / Minimalquerdistanz dem Berechnungsschritt zur Ermittlung der Flächenkoordinaten übergeben, wodurch der im Bauwesen wichtige senkrechte Abstand jeweils von einer Innenkante der Wandfläche zur Bestimmung der Flächenkoordinaten verwendet wird. Vorteilhaft werden im Messschritt je Längsmessrichtung / Quermessrichtung nur jeweils eine begrenzte Anzahl Einzelmessungen zu in einem engen Winkelbereich (+/-5°) beidseitig winklig differentiell versetzten Messrichtungen durchgeführt, wodurch die Anzahl der Einzelmessungen verringert werden kann.

Vorteilhaft werden im Messschritt die den Einzelmessungen zugeordneten Messwertpaare (Distanz, Winkel) erfasst und abgespeichert, wodurch diese einem nachfolgenden Messsignalverarbeitungsschritt zur Bestimmung der Minimallängsdistanz / Minimalquerdistanz sowie des Längslotwinkels / Querlotwinkels zur Verfügung stehen. Vorteilhaft beinhaltet der Messsignalverarbeitungsschritt ein Verfahren zur Approximation (Methode der kleinsten Quadratabweichung etc.) der Messwertpaare an eine Kurve der Distanz als quadratische Funktion des Winkels, wodurch die Minimallängsdistanz / Minimalquerdistanz sowie der Längslotwinkel / Querlotwinkel zu einer Innenkante der Wandfläche mittels des Scheitelpunktes der Fittparabel mathematisch exakt approximierbar ist.
Vorteilhaft beinhaltet der Berechnungsschritt einen Koordinatentransformationsschritt, welcher aus der Minimallängsdistanz / Minimalquerdistanz, dem Längslotwinkel / Querlotwinkel sowie einer gerätespezifischen Positionsversetzung, um welche das Positionierungsmittel zum geometrischen Schnittpunkt der Längsmessrichtung mit der Quermessrichtung versetzt ist, mittels trigonometrischer Funktionen die Flächenkoordinaten des Positionierungsmittels bestimmt, wodurch das Positionierungsmittel nicht exakt am Schnittpunkt der Längsmessrichtung mit der Quermessrichtung angeordnet sein muss, was technologisch aufwendig ist, da sich dort zumeist eine Baugruppe (Schwenkmittel, Umlenkmittel) des Quermessmittels befindet.

Die Erfindung wird bezüglich eines vorteilhaften Ausführungsbeispiels näher erläutert mit:
Fig. 1 als Prinzip der Flächenkoordinatenmessung
Fig. 2 als Flächenkoordinatenmessgerät
Fig. 3 als Variante
Fig. 4 als nicht unter die beanspruchte Erfindung fallende Variante einer Einzelheit
Fig. 5 als nicht unter die beanspruchte Erfindung fallende Variante einer Einzelheit
Fig. 6 als Einzelheit
Fig. 7 als Algorithmus
Fig. 8 als Berechnungsmodell
Fig. 9 als Anzeige

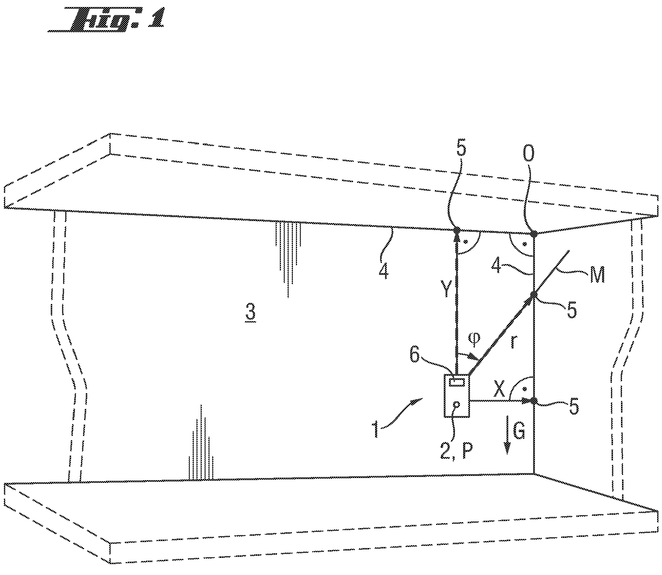

Nach Fig. 1 ist ein Flächenkoordinatenmessgerät 1 mittels einem Positionierungsmittel 2 an einem Flächenpunkt P einer Wandfläche 3 mit Innenkanten 4 positioniert. Mittels mehrfacher Einzelmessungen von Distanzen r und Winkeln [phi] zum je Messrichtung M zugeordneten Messpunkt 5 an einer Innenkante 4 werden im zugeordneten Messverfahren mittels je einer zu diesen lotrechten Längsdistanzmessung / Querdistanzmessung die lokalen kartesischen Flächenkoordinaten X, Y des Flächenpunktes P auf der Wandfläche 3 bestimmt. Der lokale Koordinatenursprung O ist dabei durch den diagonalen Eckpunkt eines an den beiden Messpunkten 5, jeweils senkrecht zur Messrichtung der Längsdistanzmessung / Querdistanzmessung verlängert, ausgebildeten Messrechtecks definiert. Die über ein Ausgabemittel 6 angezeigten Flächenkoordinaten X, Y sind lotrecht zu den Innenkanten 4 definiert, welche - wie im Baugewerbe üblich - horizontal und vertikal zur Gravitationsbeschleunigung G verlaufen.

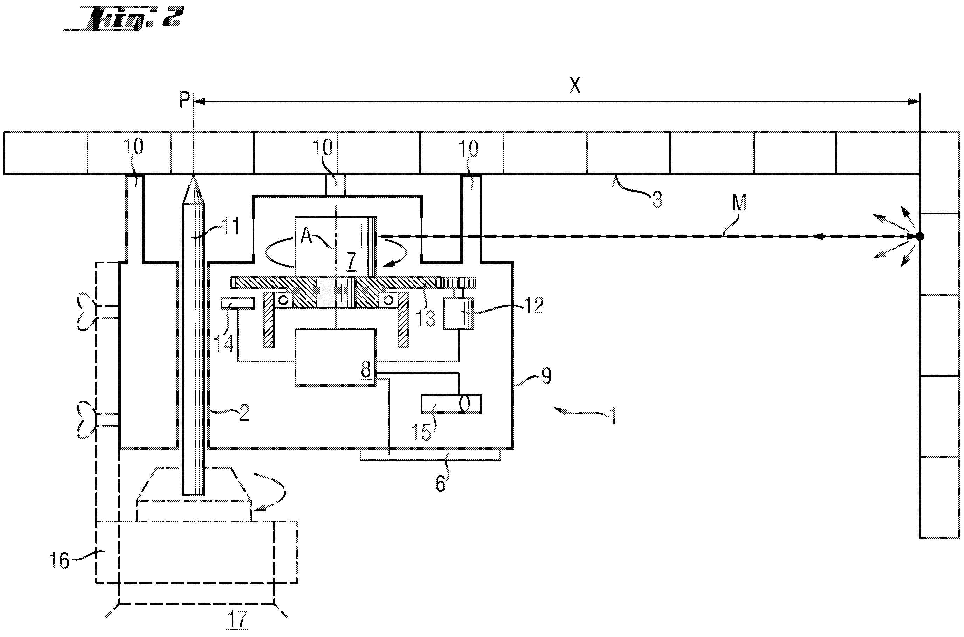

Nach Fig. 2 weist das Flächenkoordinatenmessgerät 1 ein zur Bestimmung einer Distanz r längs einer Messrichtung M geeignetes elektronisches Entfernungsmesssystem 7 in Form eines üblichen Laserentfernungsmesssystems, ein Rechenmittel 8 und ein handhabbares Gehäuse 9 auf. Zum rutschfreien sowie parallel beabstandeten Ansetzen an die Wandfläche 3 weist das Gehäuse 9 als Ansetzmittel drei Abstandhalter 10 auf. Das zur Positionierung an dem Flächenpunkt P der Wandfläche 3 ausgebildete Positionierungsmittel 2 ist in Form einer hohlzylinderförmigen Markierungskontur ausgebildet, durch welche ein Markierungsmittel 11 in Form eines Bleistiftes geführt ist. Das Ausgabemittel 6 ist in Form einer numerischen Anzeige für einen vom Rechenmittel 8 ermittelten X- und Y-Koordinatenwert ausgebildet. Zudem ist zur zusätzlichen Bestimmung einer Querdistanz entlang einer quer zu der Längsmessrichtung orientierten Quermessrichtung ein Quermessmittel in Form eines im Vollkreis um eine Achse A senkrecht zur Wandfläche 3 steuerbar verschwenkbaren Schwenkmittels in Form eines, von einem Elektromotor 12 zahnradgetriebenen, Drehtellers 13 angeordnet, dessen Schwenkwinkel mit einem Winkelsensor 14 in Form eines inkrementellen Hall-Sensors erfasst sowie in einem Winkelregelkreis mit dem Rechenmittel 8 und dem Elektromotor 12 geregelt wird. Das Rechenmittel 8 ist zudem mit einem Nivelliersensor 15 in Form einer elektronischen Libelle verbunden, der die Neigung des Gehäuses 9 bezüglich der Erdbeschleunigung misst, wodurch in einem zulässigen Winkelbereich von +/- 25° eine automatische Nivellierung der Messrichtung stattfindet. Zudem ist eine optional montierte (gestrichelt dargestellte) mechanische Befestigungsschnittstelle 16 in Form eines Montageflansches für eine passend zugeordnete Handwerkzeugmaschine 17 in Form eines Bohrhammers, deren die Wandfläche 3 bohrendes Werkzeug (an Stelle des Bleistiftes) das am Positionierungsmittel 2 angeordnete Markierungsmittel 11 ist.

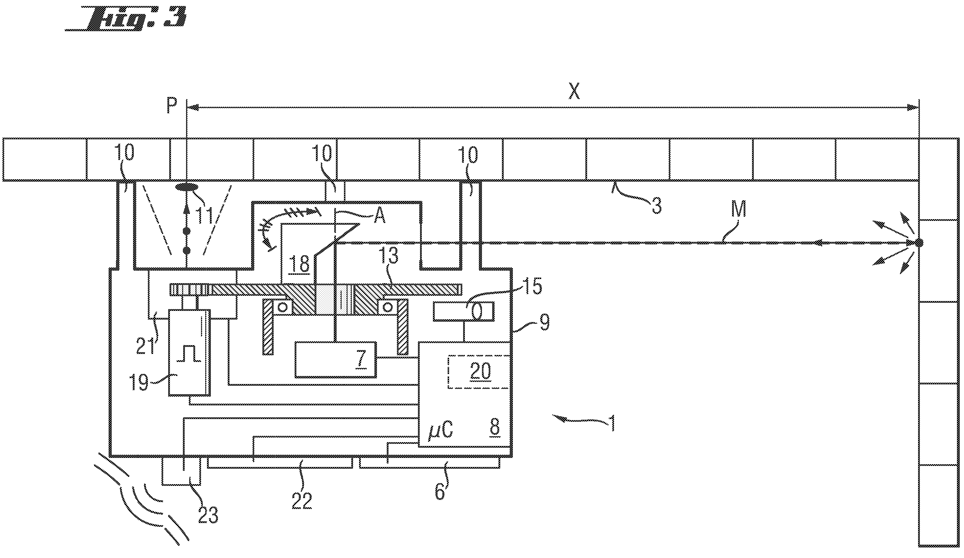

Nach Fig. 3 weist im Unterschied zu Fig. 2 ein derartiges Flächenkoordinatenmessgerät 1 ein Quermessmittel in Form eines um 120° um eine Achse A senkrecht zur Wandfläche 3 steuerbar verschwenkbaren Schwenkmittels in Form eines Umlenkspiegels 18 des ansonsten fest im Gehäuse 9 angeordneten Laserentfernungsmesssystems 7 auf. Mehrere diskrete Schwenkwinkel (-5°, 0°, 5°, 85°, 90°, 95°) bezüglich der Vertikalen werden über einen inkrementell angesteuerten Schrittmotor 19, der zahnradgetrieben den Drehteller 13 antreibt, direkt vom Rechenmittel 8 gesetzt. Dem als Mikrocontroller [müC] ausgebildetem Rechenmittel 8 ist ein integriertes Speichermittel 20 zur Speicherung der einzelnen Messwertpaare, bestimmten Koordinatenwerten und den Soll-Koordinaten zugeordnet. Es ist eine Markiervorrichtung 21 in Form einer Tintenstrahlvorrichtung für Markierungsmittel 11 in Form von Tintentropfen vorhanden, die steuerbar mit dem Rechenmittel 8 verbunden innerhalb eines Toleranzbereiches (+/- 1 cm) einen Positionierungsfehler des Gehäuses 8 ausgleichen kann, wobei für weiterführende Einzelheiten einer Markiervorrichtung 21 auf die DE10034035 verwiesen wird. Weiter ist ein jeweils mit dem Rechenmittel 8 verbundenes Eingabemittel 22 in Form von Tasten zur Eingabe von Soll-Koordinaten und dem Markierbefehl sowie eine übliche, bidirektionale Funk-Datenübertragungsschnittstelle 23 vorhanden.

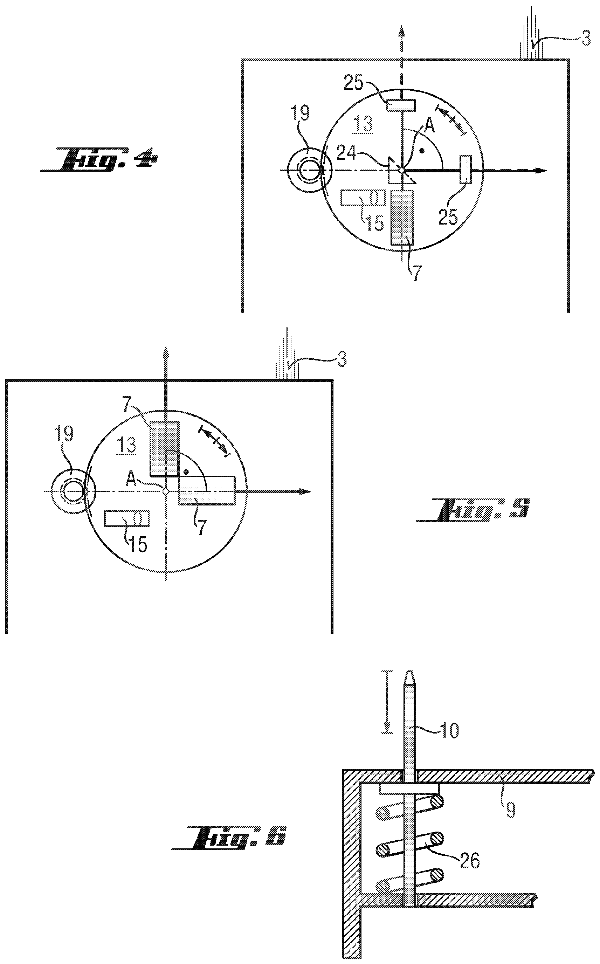

Nach Fig. 4 ist das nicht unter die beanspruchte Erfindung fallende elektronische Entfernungsmesssystem 7 in Form eines Laserentfernungsmesssystems unmittelbar auf dem Drehteller 13 angeordnet, der mit dem Schrittmotor 19 um eine Achse A senkrecht zur Wandfläche 3 um +/- 25° steuerbar verschwenkbar ist. Der sichtbare Laserstrahl wird über einen im Drehpunkt angeordneter Strahlteiler 24 in zwei Teilstrahlen aufgeteilt, die zueinander einen Winkel von 90° ausbilden und mit jeweils einem steuerbaren optischen Durchgangsschalter 25 je Teilstrahl alternierend als Längsmessrichtung / Quermessrichtung geschaltet werden. Zudem ist der Nivelliersensor 15 in Form einer elektronischen Libelle, der die Neigung bezüglich der Erdbeschleunigung misst, ebenfalls mit auf dem Drehteller 13 angeordnet.

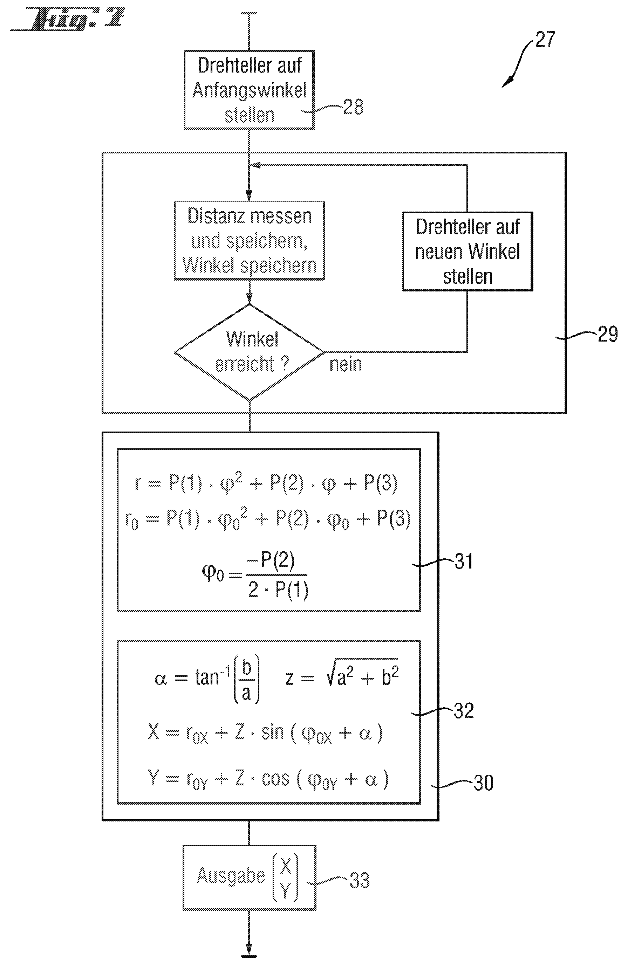

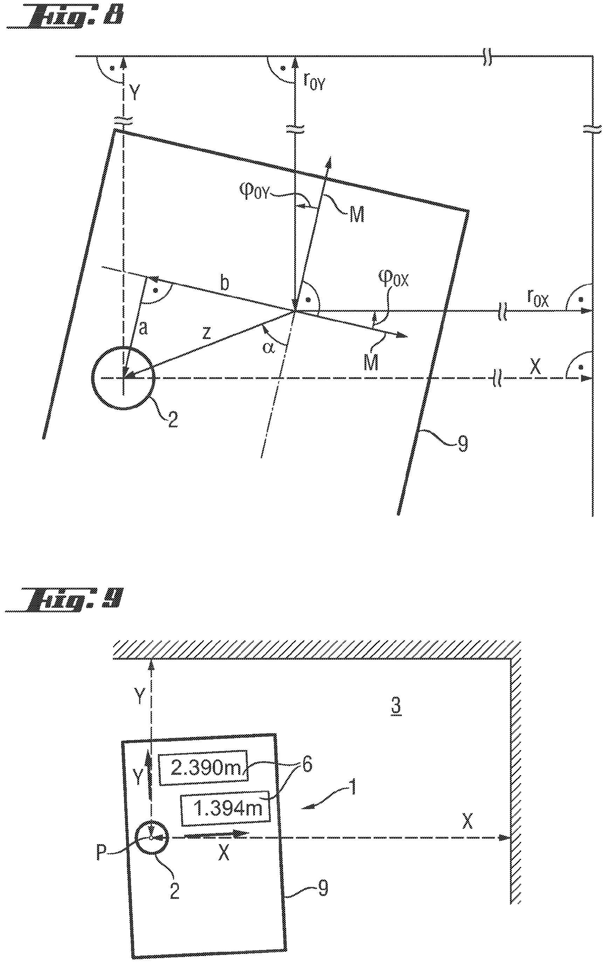

Nach Fig. 5 sind im Unterschied zu Fig. 4 ebenfalls nicht unter die beanspruchte Erfindung fallend zwei elektronische Entfernungsmesssysteme 7 in Form je eines Laserentfernungsmesssystems, deren jeweilige Laserstrahlen zueinander einen Winkel von 90° ausbilden, unmittelbar auf dem steuerbar verschwenkbaren Drehteller 13 angeordnet.
Nach Fig. 6 ist ein im Gehäuse 9 gelagerter und mittels einer Feder 26 federnd druckvorgespannter Ansetzpunkt 10 in der Länge versetzbar.
Nach den Fig. 7, 8 und 9 weist der im Rechenmittel des Flächenkoordinatenmessgerätes 1 zeitlich modular ausgeführte Algorithmus 27 des Messverfahrens zur Messung der Flächenkoordinaten X, Y nach einem Initialisierungsschritt 28, in dem der Drehteller auf einen Anfangswinkel geschwenkt wird, welcher aus einer mit dem Nivelliersensor bestimmten Lage zur Gravitationsbeschleunigung ermittelt wird, einen Messschritt 29 auf. In diesem Messschritt 29 werden in jeweils drei Einzelmessungen je Längsmessrichtung / Quermessrichtung, zu den vom Rechenmittel vorgegebenen Schwenkwinkeln (-5°, 0°, 5°, 85°, 90°, 95°), in welche der Drehteller gesteuert einschwenkt, jeweils zugeordneten Messrichtungen M jeweils Distanzen r und Winkel [phi] gemessen und gespeichert. Insbesondere wird im Winkel [phi] bei 0° eine vertikale Längsdistanzmessung und bei 90° eine horizontale Querdistanzmessung ausgeführt. In einem weiteren Berechnungsschritt 30 wird aus den einzelnen Messwerten der Längsdistanzmessungen sowie der Querdistanzmessungen eine lokale Flächenkoordinate ermittelt, wobei in einem intern vorgelagerten Messsignalverarbeitungsschritt 31 je engem Winkelbereich zur Längsmessrichtung / Quermessrichtung jeweils die als minimale Längsdistanz / Querdistanz definierte Minimallängsdistanz / Minimalquerdistanz zur Berechnung der Flächenkoordinaten X, Y verwendet wird. Dazu weist der Messsignalverarbeitungsschritt 31 je engem Winkelbereich zur Längsmessrichtung / Quermessrichtung eine Approximation der gespeicherten Distanzen r und Winkel [phi] an eine Kurve in Form einer für die Distanz r quadratischen Funktion des Winkels [phi] auf. Die drei nach der Methode der kleinsten Quadratabweichung bestimmten Schätzwerte P(1), P(2), P(3) gestatten anschliessend je Längsmessrichtung / Quermessrichtung die exakte Berechnung der Minimaldistanzen r₀ sowie der Lotwinkel [phi]₀. In einem anschliessenden internen Koordinatentransformationsschritt 32 wird aus der Minimallängsdistanz r_{0Y} / Minimalquerdistanz r_{0X}, dem Längslotwinkel [phi]_{0Y} / Querlotwinkel [phi]_{0X} sowie einer, im lokalen Gehäusekoordinatensystem mit einem Längenversatz a und einem Breitenversatz b gerätespezifisch vorgegebenen, Positionsversetzung z des Positionierungsmittels 2 zum Schnittpunkt der Messrichtungen M, mittels trigonometrischer Funktionen die Flächenkoordinate X, Y des Positionierungsmittels 2 bestimmt. Die Flächenkoordinaten X, Y werden in einem nachfolgenden Ausgabeschritt 33 mit dem Ausgabemittel 6 als X- und Y-Koordinatenwert numerisch ausgegeben sowie per Funk-Datenschnittstelle versendet.

## Patentansprüche

1. Flächenkoordinatenmessgerät mit einem Rechenmittel (8) und einem handhabbaren Gehäuse (9), welches ein zur Positionierung an einem Flächenpunkt (P) einer Wandfläche (3) ausgebildetes Positionierungsmittel (2) sowie ein Ausgabemittel (6) für ein vom Rechenmittel (8) ermitteltes Messergebnis aufweist, wobei ein zur Bestimmung einer Längsdistanz längs einer Längsmessrichtung geeignetes elektronisches Entfernungsmesssystem (7) sowie ein Quermessmittel zur zusätzlichen Bestimmung einer Querdistanz längs einer quer zu der Längsmessrichtung orientierten Quermessrichtung vorhanden sind, **dadurch gekennzeichnet, dass** das Quermessmittel ein die Messrichtung (M) zumindest um einen Winkel ([phi]) von 90° steuerbar verschwenkendes Schwenkmittel (13, 18) ist, wobei im Winkel ([phi]) von 0° die Längsdistanzmessung und im Winkel ([phi]) von 90° die Querdistanzmessung erfolgt.

2. Flächenkoordinatenmessgerät nach Anspruch 1, **dadurch gekennzeichnet, dass** das Entfernungsmesssystem (7) als Laserentfernungsmesssystem ausgebildet ist.

3. Flächenkoordinatenmessgerät nach einem der vorherigen Ansprüche, **dadurch gekennzeichnet, dass** zumindest ein bezüglich der Erdbeschleunigung sensitiver Nivelliersensor (15) vorhanden ist, der eine Messrichtung (M) horizontal oder vertikal auszurichten gestattet.

4. Flächenkoordinatenmessgerät nach Anspruch 3, **dadurch gekennzeichnet, dass** der Nivelliersensor (15) mit dem Rechenmittel (8) regelnd verbunden ist.

5. Flächenkoordinatenmessgerät nach einem der vorherigen Ansprüche, **dadurch gekennzeichnet, dass** das Positionierungsmittel (2) als eine Markierungskontur ausgebildet ist.

6. Flächenkoordinatenmessgerät nach einem der vorherigen Ansprüche, **dadurch gekennzeichnet, dass** dem Rechenmittel (8) ein Speichermittel (20) zur Speicherung zumindest von Koordinatenwerten zugeordnet ist.

7. Flächenkoordinatenmessgerät nach einem der vorherigen Ansprüche, **dadurch gekennzeichnet, dass** eine zumindest mit dem Rechenmittel (8) verbundene Datenübertragungsschnittstelle (23) vorhanden ist.

8. Flächenkoordinatenmessgerät nach einem der vorherigen Ansprüche, **dadurch gekennzeichnet, dass** eine mechanische Befestigungsschnittstelle (16) zu einer passend zuordenbaren Handwerkzeugmaschine (17) vorhanden ist, deren die Wandfläche (3) bearbeitendes Werkzeug das am Positionierungsmittel (2) angeordnete Markierungsmittel (11) ist.

9. Messverfahren zur Messung der Flächenkoordinaten (X, Y) eines Flächenpunktes (P) einer Wandfläche (3) mit einem Flächenkoordinatenmessgerät (1) nach einem der vorherigen Ansprüche, wobei das Rechenmittel (8) einen programmgesteuerten Algorithmus (27) aufweist, welcher in einem Messschritt (29) eine Längsdistanzmessung zu einem Messpunkt (5) entlang einer Längsmessrichtung sowie eine Querdistanzmessung zu einem Messpunkt (5) entlang einer Quermessrichtung durchführt und in einem weiteren Berechnungsschritt (30) aus den Messwerten der Längsdistanzmessung sowie der Querdistanzmessung lokale Flächenkoordinaten (X, Y) des Positionierungspunktes (P) ermittelt, **dadurch gekennzeichnet, dass** im Messschritt (29) die Messrichtung (M) vom Schwenkmittel um einen Winkel ([phi]) geschwenkt wird, wobei im Winkel ([phi]) von 0° die Längsdistanzmessung und im Winkel ([phi]) von 90° die Querdistanzmessung ausgeführt wird.

10. Messverfahren nach Anspruch 9, **dadurch gekennzeichnet, dass** im Messschritt (29) der Längsdistanzmessung / Querdistanzmessung mittels dem gesteuerten Schwenkmittel eine Folge von mehreren Einzelmessungen zu winklig differentiell versetzten Messrichtungen (M) durchgeführt wird sowie deren Längsdistanzen / Querdistanzen erfasst werden, und jeweils eine aus den Längsdistanzen / Querdistanzen ermittelte Minimallängsdistanz (r_{0Y}) / Minimalquerdistanz (r_{0X}) dem Berechnungsschritt (31) zur Ermittlung der Flächenkoordinaten (X, Y) übergeben wird.

11. Messverfahren nach Anspruch 10, **dadurch gekennzeichnet, dass** im Messschritt je Längsmessrichtung / Quermessrichtung nur jeweils eine begrenzte Anzahl von Einzelmessungen zu in einem engen Winkelbereich beidseitig winklig differentiell versetzten Messrichtungen (M) durchgeführt werden.

12. Messverfahren nach einem der Ansprüche 10 bis 11, **dadurch gekennzeichnet, dass** im Messschritt (29) die den Einzelmessungen zugeordneten Messwertpaare erfasst und abgespeichert werden sowie einem nachfolgenden Messsignalverarbeitungsschritt (31) zur Bestimmung der Minimaldistanz (r₀) sowie des Lotwinkels ([phi]₀) zur Verfügung stehen.

13. Messverfahren nach Anspruch 12, **dadurch gekennzeichnet, dass** der Messsignalverarbeitungsschritt (31) ein Verfahren zur Approximation der Messwertpaare an eine Funktion der Distanz (r) als quadratische Funktion des Winkels ([phi]) beinhaltet.

14. Messverfahren nach einem der Ansprüche 10 bis 13, **dadurch gekennzeichnet, dass** der Berechnungsschritt (30) einen Koordinatentransformationsschritt (32) beinhaltet, welcher aus der Minimallängsdistanz (r_{0Y}) / Minimalquerdistanz (r_{0X}), dem Längslotwinkel ([phi]_{0Y}) / Querlotwinkel ([phi]_{0X}) sowie einer gerätespezifischen Positionsversetzung (z), um welche das Positionierungsmittel (2) zum geometrischen Schnittpunkt der Messrichtungen (M) versetzt ist, mittels trigonometrischer Funktionen die Flächenkoordinaten (X, Y) des Positionierungsmittels (2) bestimmt.

## Claims

1. Device for measuring surface co-ordinates having a computing means (8) and a housing (9), able to be used by hand, which has a positioning means (2) designed for positioning at a point (P) on a wall surface (3) and an output means (6) for a resulting measurement determined by the computing means (8), there being present an electronic distance measuring system (7) suitable for the determination of a longitudinal distance in a direction of longitudinal measurement and a means for transverse measurement for the additional determination of a transverse distance in a direction of transverse measurement orientated transversely to the direction of longitudinal measurement, **characterised in that** the means for transverse measurement is a pivoting means (13, 18) which pivots the direction of measurement (M) controllably at least through an angle ([phi]) of 90°, the measurement of longitudinal distance taking place at an angle ([phi]) of 0° and the measurement of transverse distance taking place at an angle([phi]) of 90°.

2. Device for measuring surface co-ordinates according to claim 1, **characterised in that** the distance measuring system (7) takes the form of a laser distance measuring system.

3. Device for measuring surface co-ordinates according to either of the preceding claims, **characterised in that** there is present at least one levelling sensor (15) sensitive to the acceleration due to gravity which allows a direction of measurement (M) to be aligned horizontally or vertically.

4. Device for measuring surface co-ordinates according to claim 3, **characterised in that** the levelling sensor (15) is connected to the computing means (8) for regulating purposes.

5. Device for measuring surface co-ordinates according to one of the preceding claims, **characterised in that** the positioning means (2) takes the form of an outline shape for marking purposes.

6. Device for measuring surface co-ordinates according to one of the preceding claims, **characterised in that** the computing means (8) has associated with it a storage means (20) for storing at least co-ordinate values.

7. Device for measuring surface co-ordinates according to one of the preceding claims, **characterised in that** there is present a data transmission interface (23) connected at least to the computing means (8).

8. Device for measuring surface co-ordinates according to one of the preceding claims, **characterised in that** there is present a mechanical fastening interface (16) for a hand-held power tool (17) which is a fit thereto and can thus be associated therewith and whose tool for working on the wall surface (3) is the marking means (11) arranged in the positioning means (2).

9. Method of measurement for measuring the surface co-ordinates (X, Y) of a point (P) on a wall surface (3) with a device for measuring surface co-ordinates (1) according to one of the preceding claims, the computing means (8) having a program-controlled algorithm (27) which, in a measuring step (29), makes a measurement of longitudinal distance to a point for measurement (5) in a direction of longitudinal measurement and a measurement of transverse distance to a point for measurement (5) in a direction of transverse measurement, and which, in a further, computing, step (30) determines local surface co-ordinates (X, Y) of the positioning point (P) from the measured values given by the measurement of longitudinal distance and the measurement of transverse distance, **characterised in that**, in the measuring step (29), the direction of measurement (M) is pivoted through an angle ([phi]) by the pivoting means, the measurement of longitudinal distance taking place at an angle ([phi]) of 0° and the measurement of transverse distance taking place at an angle([phi]) of 90°.

10. Method of measurement according to claim 9, **characterised in that**, in the step (29) of measuring the longitudinal/transverse distance, a succession of individual measurements are carried out by means of the controlled pivoting means in directions of measurement (M) offset angularly at different angles, and the longitudinal/transverse distances given by these measurements are logged and in each case a minimum longitudinal distance (r_{0Y}) /minimum transverse distance (r_{0X}) determined from the longitudinal/transverse distances is transmitted to the computing step (31) for determining the surface co-ordinates (X, Y).

11. Method of measurement, according to claim 10, **characterised in that**, in the measuring step, in each of the directions of longitudinal/transverse measurement and on both sides thereof, only a limited number of individual measurements are carried out, in directions of measurement (M) which are offset angularly at different angles in a narrow angular range.

12. Method of measurement according to either of claims 10 and 11, **characterised in that**, in the measuring step (29), the pairs of measured values associated with the individual measurements are logged and stored and are available to a subsequent step (31) of processing measurement signals for determining the minimum distance (r₀) and the angle to the perpendicular ([phi]₀).

13. Method of measurement according to claim 12, **characterised in that** the step (31) of processing measurement signals includes a method of approximating the pairs of measured values to a function of distance (r) as a quadratic function of the angle ([phi]).

14. Method of measurement according to one of claims 10 to 13, **characterised in that** the computing step (30) includes a co-ordinate converting step (32) which determines the surface co-ordinates (X, Y) of the positioning means (2) by means of trigonometric functions from the minimum longitudinal distance (r_{0Y}) /minimum, transverse distance (r_{0X}), the angle to the longitudinal perpendicular ([phi]_{0Y}), the angle to the transverse perpendicular ([phi]_{0X}) and a positional offset (z), specific to the device, by which the positioning means (2) is offset from the geometrical point of intersection of the directions of measurement (M).

## Revendications

1. Appareil de mesure de coordonnées de surface ayant des moyens de calcul (1) et un boîtier (9) pouvant être manipulé, lequel boîtier comporte des moyens de positionnement (2) conçus pour un positionnement sur un point de surface (P) d'une surface de paroi (3), ainsi que des moyens de sortie (6) pour un résultat de mesure déterminé par les moyens de calcul (8), dans lequel il existe un système de mesure de distance électronique (7) adapté pour déterminer une distance longitudinale le long d'une direction de mesure longitudinale ainsi que des moyens de mesure transversale pour déterminer en plus une distance transversale le long d'une direction de mesure transversale orientée transversalement à la direction de mesure longitudinale, **caractérisé en ce que** les moyens de mesure transversale sont des moyens pivotants (13, 18) qui font pivoter la direction de mesure (M) de manière commandée au moins d'un angle ([phi]) de 90°, dans lequel la mesure de distance longitudinale s'effectue à un angle ([phi]) de 0° et la mesure de distance transversale s'effectue à un angle de 90°.

2. Appareil de mesure de coordonnées de surface selon la revendication 1, **caractérisé en ce que** le système de mesure de distance (7) est conçu comme un système de mesure de distance à laser.

3. Appareil de mesure de coordonnées de surface selon l'une des revendications précédentes, **caractérisé en ce qu'**il existe au moins un détecteur de niveau (15) sensible à l'accélération de la pesanteur, lequel détecteur de niveau permet d'orienter horizontalement ou verticalement un dispositif de mesure (M).

4. Appareil de mesure de coordonnées de surface selon la revendication 3, **caractérisé en ce que** le détecteur de niveau (15) est relié aux moyens de calcul (8) de manière régulatrice.

5. Appareil de mesure de coordonnées de surface selon l'une des revendications précédentes, **caractérisé en ce que** les moyens de positionnement (2) sont conçus comme un contour de marquage.

6. Appareil de mesure de coordonnées de surface selon l'une des revendications précédentes, **caractérisé en ce que** des moyens de mémorisation (20) sont associés aux moyens de calcul (8) pour mémoriser au moins des valeurs de coordonnées.

7. Appareil de mesure de coordonnées de surface selon l'une des revendications précédentes, **caractérisé en ce qu'**il existe au moins une interface de transmission de données (23) reliée aux moyens de calcul (8).

8. Appareil de mesure de coordonnées de surface selon l'une des revendications précédentes, **caractérisé en ce qu'**il existe une interface de fixation mécanique (16) à une machine-outil manuelle (17) pouvant être associée de manière adaptée, dont l'outil qui usine la surface de paroi (3) est le moyen de marquage (11) agencé sur les moyens de positionnement (2).

9. Procédé de mesure pour mesurer les coordonnées de surface (X, Y) d'un point de surface (P) d'une surface de paroi (3) avec un appareil de mesure de coordonnées de surface (1) selon l'une des revendications précédentes, dans lequel les moyens de calcul (8) comportent un algorithme piloté par programme (27), lequel algorithme réalise, à une étape de mesure (29), une mesure de distance longitudinale jusqu'à un point de mesure (5) le long d'une direction de mesure longitudinale, ainsi qu'une mesure de distance transversale jusqu'à un point de mesure (5) le long d'une direction de mesure transversale et, à une étape de calcul supplémentaire (30), détermine les coordonnées de surface locales (X, Y) du point de positionnement (P) à partir des valeurs de mesure de la mesure de distance longitudinale ainsi que de la mesure de distance transversale, **caractérisé en ce qu'**à l'étape de mesure (29), les moyens de pivotement font pivoter le dispositif de mesure (M) d'un angle ([phi]), dans lequel la mesure de distance longitudinale est réalisée à un angle ([phi]) de 0° et la mesure de distance transversale est réalisée à un angle de 90°.

10. Procédé de mesure selon la revendication 9, **caractérisé en ce qu'**à l'étape de mesure (29) de la mesure de distance longitudinale / mesure de distance transversale, une série de plusieurs mesures individuelles est réalisée au moyen des moyens pivotants commandés par rapport à des dispositifs de mesure (M) décalés à différents angles, et leurs distances longitudinales / distances transversales sont détectées, et chaque distance longitudinale minimale (r_{0Y}) / distance transversale minimale (r_{0X}) déterminée à partir des distances longitudinales / distances transversales est transmise à l'étape de calcul (31) pour déterminer les coordonnées de surface (X, Y).

11. Procédé de mesure selon la revendication 10, **caractérisé en ce qu'**à l'étape de mesure de chaque direction de mesure longitudinale / direction de mesure transversale, uniquement un nombre limité de mesures individuelles est respectivement réalisé par rapport à des dispositifs de mesure (M) décalés à différents angles des deux côtés sur une plage angulaire étroite.

12. Procédé de mesure selon l'une des revendications 10 à 11, **caractérisé en ce qu'**à l'étape de mesure (29), les paires de valeurs de mesure associés aux mesures individuelles sont détectés et mémorisés, et sont disponibles pour une étape suivante de traitement du signal de mesure (31) afin de déterminer la distance minimale (r₀) ainsi que l'angle perpendiculaire ([phi]₀).

13. Procédé de mesure selon la revendication 12, **caractérisé en ce que** l'étape de traitement du signal de mesure (31) inclut un procédé pour approximer les paires de valeurs de mesure en fonction de la distance (r) sous la forme d'une fonction quadratique de l'angle ([phi]).

14. Procédé de mesure selon l'une des revendications 10 à 13, **caractérisé en ce que** l'étape de calcul (30) inclut une étape de transformation de coordonnées (32) qui détermine au moyen de fonctions trigonométriques, les coordonnées de surface (X, Y) des moyens de positionnement (2), à partir de la distance longitudinale minimale (r_{0Y}) / distance transversale minimale (r_{0X}), de l'angle perpendiculaire longitudinal ([phi]_{0Y}) / angle perpendiculaire transversal ([phi]_{0X}) ainsi que d'un décalage de position spécifique à l'appareil (z), dont les moyens de positionnement (2) sont décalés par rapport au point d'intersection géométrique des dispositifs de mesure (M).
